# EUROPEAN PATENT SPECIFICATION

(11) **EP 0 797 924 B1**
(45) Date of publication and mention of the grant of the patent: **28.11.2001**
(21) Application number: 96104828.7
(22) Date of filing: 27.03.1996
(51) Int. Cl.: A23J 3/00, A23D 7/015, A23C 9/154, A23C 7/04

(54) **Low fat food ingredients**
Fettarme Nahrungsmittelbestandteile
Ingrédient alimentaire à faible teneur en matières grasses

(43) Date of publication of application: 01.10.1997
(73) Proprietor: SOCIETE DES PRODUITS NESTLE S.A., 1800 Vevey (CH)
(72) Inventor: Tolstoguzov, Vladimir Borisovich, 1009 Pully (CH); Rivier, Vincent, 1033 Cheseaux (CH)
(74) Representative: Pate, Frederick George

(56) References cited:
- EP-A- 0 052 899
- WO-A-91/12726
- FOOD HYDROCOLLOIDS, vol. 2, no. 3, 1 January 1988, pages 195-207, XP000563978 TOLSTOGUZOV V B: "CONCENTRATION AND PURIFICATION OF PROTEINS BY MEANS OF TWO-PHASE SYSTEMS: MEMBRANELESS OSMOSIS PROCESS"

## Description

The present invention relates to a process for the production of a low-fat food ingredients which can be used as fat-replacers in food products.

In Food Hydrocolloids Vol. 2 No. 3 pp. 195-207, 1988, there is described a method of purifying and concentrating protein solutions, a method called membraneless osmosis.

The basic idea underlying the membraneless osmosis process involves two physico-chemical phenomena (i) the phase separation in aqueous mixed solutions of biopolymers differing in their chemical composition; and (ii) the difference between the above mentioned biopolymers in their affinity for water. This means that mixtures of protein and polysaccharide solutions can separate into two phases, one which is relatively rich in the protein and another which is relatively rich in the polysaccharide. The difference between the concentrations of macromolecular components in the co-existing phases may be 10-fold or even more. Unlike the osmosis phenomenon, i.e. diffusion transfer of a solvent from the solution through a semi-permeable membrane separating the solvent from the solution, the membraneless osmosis process uses two aqueous solutions of macromolecular substances with different solvent chemical potentials. The function of a membrane in this process is performed by the interface between the two phases. This process is called membraneless osmosis, because it involves the transfer of a solvent, namely water, from one solution to another through the interface between the two phases. In other words, the membraneless osmosis uses two types of phase-forming macromolecular substances. One is a target to be concentrated, while the other, more hydrophilic, is diluted as the former is concentrated. Food proteins are concentrated using polymers suitable for use in foodstuffs. Usually these are polysaccharides.

Generally, membraneless osmosis may be worthwhile, as an industrial-scale process, only if polysaccharides can be recovered more easily and cheaply from the dilute solution than proteins. It is therefore critically important to recycle the polysaccharide - to recover it from the dilute polysaccharide phase and re-use it in the process. It is also possible to make use of dilute polysaccharide solutions for some other purpose, e.g. to produce food products such as various drinks, jellies and whipped products. The use of anionic polysaccharides seems to be most promising, because it is easy to precipitate them from dilute solutions in the form of complexes with proteins at pH values below the protein isoelectric point.

We have now found that low fat food ingredients can be prepared by a process which we believe is based on membraneless osmosis.

According to the present invention there is provided a process for preparing low fat food ingredients which comprises contacting a protein material with at least one polysaccharide in an aqueous medium to produce a mixture forming two phases, separating the phases into a heavier lower concentrated phase relatively rich in protein and a lighter upper diluted phase relatively rich in polysaccharide containing a minor amount of proteins transferred from the protein material, characterised in that the separated upper phase is heated to a temperature from 60°C to 220°C, cooling the heated upper phase to form gel-like particles of the proteins transferred from the protein material with the polysaccharide followed by separating and drying the gel-like particles.

The protein material may be, for example, milk, skim milk, a vegetable extract containing protein such as soya bean milk or lupin bean milk, blood protein or coconut milk. The protein may be used as a suspension, dispersion or solution in water.

The polysaccharide may be neutral, cationic or anionic, e.g. pectin such as high methoxy pectin, an alginate, arabic gum, locust bean gum or kappa-, lambda-, or iota-carrageenan. The polysaccharide may be microbiological in origin such as xanthan or it may be chemically modified such as methyl cellulose or carboxymethyl cellulose. The polysaccharide may be used as a suspension, dispersion or solution in water. If desired, two or more polysaccharides may be used to improve the consistency of the gel-like particles.

The protein material which may be in a dry or dissolved form may be contacted with the polysaccharide which may also be in a dry or dissolved form by adding either component to the other or by mixing the two components together.

The concentration of the protein in the protein material may be from 1 to 30% by weight and preferably from 2 to 25% by weight based on the total weight of the protein material. The concentration of the polysaccharide in the aqueous medium may be from 0.01 to 15% by weight and preferably from 0.2 to 7.5% by weight based on the total weight of the aqueous medium.

The temperature at which the protein material is contacted with the polysaccharide may be from 0°C to a temperature above the denaturing temperature of the protein, e.g. from 2°C to 70°C preferably from 10°C to 40°C and especially from 20°C to 35°C.

The mixture of the protein material and the polysaccharide may be separated in the two phases simply by settling, i.e. by standing for a period of a few seconds to a few minutes. However, the mixture is preferably agitated and then centrifuged to separate the two phases. If desired, the mixture may be centrifuged to separate the two phases without previous agitation. The upper light phase rich in polysaccharide may conveniently be removed by decantation.

When the mixture is agitated, this may conveniently be carried out by stirring for a period of time from 1 second to 60 minutes, preferably from 1 to 40 minutes and more preferably from 5 to 30 minutes.

When centrifugation is carried out, the duration of the centrifugation may be from 1 to 60 minutes and preferably from 5 to 30 minutes. The centrifugation may have an acceleration of from 500 to 100000 g, preferably from 1000 to 50000 g and especially from 8000 to 15000 g.

The pH of the aqueous medium is preferably from pH 4 to pH 10 and more preferably from 5.5 to 7.5. When the pH is above the isoelectric point of the particular protein, the salt (as NaCl) concentration may be from 0.01M to 0.3M. Otherwise the salt concentration may be from above 0.3M to 0.5M when the pH is below the isoelectric point of the particular protein.

After removal, the upper light phase is preferably heated to a temperature from 70° to 160° and more preferably from 80° to 130°C. The heating of the upper light phase may be carried out with agitation such as stirring for a period of time from 1 second to 60 minutes and preferably from 5 to 30 minutes. After heating, the upper light phase is cooled, for instance to ambient temperature, e.g. from 15° to 60°C and preferably from 20°to 50°C to give the gel-like particles. The gel-like particles may be separated by sedimentation, filtration or centrifugation. They may finally be dried by conventional methods. The size of the gel-like particles may be from 1 to 100 millimicrons and preferably from 5 to 25 millimicrons.

The gel-like particles obtained from skim milk are formed by the gelification of milk whey proteins and may be used as fat replacers by adding to meat protein or by mixing with a protein rich phase (e.g. as obtained by separation of the lower heavy phase in the process of this invention) to produce products imitating full fat milk products such as creams, whipped creams and ice creams. The gel-like particles obtained from vegetable extracts containing protein such as soya bean milk or lupin bean milk may be added to low fat product preparations such as creamers, creams or sausages. The gel-like particles obtained from blood proteins suspensions are formed by the gelification of blood serum proteins and may be used as fat replacers or fillers for petfood products. The gel-like particles may also be used in cosmetic applications.

The following Examples further illustrate the present invention. Parts and percentages are given by weight unless otherwise stated..

### EXAMPLE 1

600 parts of a skim milk solution containing 10% by weight of proteins is mixed with 200 parts of a suspension of high methoxy pectin containing 1% by weight of high methoxy pectin at a temperature of 30°C. Two phases are formed, a lower heavy concentrated protein phase containing 75% casein and an upper light dilute phase rich in polysaccharide and containing milk whey proteins and lactose transferred from the skim milk. After standing for five minutes, the upper light phase is decanted off and heated at 90°C for 15 minutes while stirring vigorously at 50 RPM. The heated upper light phase is then cooled to 25°C and filtered whereupon spherical gel-like particles of milk whey proteins and high methoxy pectin form the residue. The gel-like particles are dried and used as a fat replacer by adding to meat protein to produce sausages.

### EXAMPLE 2

A similar process to that described in Example 1 is carried out except that the protein used is a blood protein suspension and the polysaccharide used is propylene glycol alginate. The gel like particles are formed by gelification of blood serum proteins and propylene glycol alginate and can be used in petfoods.

## Claims

1. A process for preparing low fat food ingredients which comprises contacting a protein material with at least one polysaccharide in an aqueous medium material to produce a mixture forming two phases, separating the phases into a heavier lower concentrated phase relatively rich in protein and a lighter upper diluted phase relatively rich in polysaccharide containing a minor amount of proteins transferred from the protein material, **characterised in that** the separated upper phase is heated to a temperature from 60°C to 220°C, cooling the heated upper phase to form gel-like particles of the proteins transferred from the protein material with the polysaccharide followed by separating and drying the gel-like particles.

2. A process according to claim 1 wherein the protein material is milk, skim milk, a vegetable extract containing protein such as soya bean milk or lupin bean milk, blood protein or coconut milk.

3. A process according to claim 1 wherein the polysaccharide is high methoxy pectin, an alginate, arabic gum, locust bean gum or kappa-, lambda, or iotacarrageenan, or xanthan, methyl cellulose or carboxymethyl cellulose.

4. A process according to claim 1 wherein the two phases are separated by settling or centrifugation.

5. A process according to claim 1 wherein the lighter upper diluted phase is removed by decantation.

6. A process according to claim 1 wherein the pH of the aqueous medium is from 4 to 10.

7. A process according to claim 1 wherein the lighter upper diluted phase is heated at a temperature from 70° to 160 °C with agitation for a period of time of from 1 second to 60 minutes.

8. A process according to claim 1 wherein the heated lighter upper diluted phase is cooled to a temperature of from 15° to 60°C to form gel-like particles.

9. A process according to claim 1 wherein the gel-like particles are separated by sedimentation, filtration or centrifugation.

10. A low fat food ingredient whenever prepared by a process according to claim 1.

11. A food product containing a low fat food ingredient prepared by a process according to any of claims 1 to 9.

## Patentansprüche

1. Verfahren zur Herstellung fettarmer Nahrungsbestandteile, welches umfasst, Inkontaktbringen eines Proteinmaterials mit mindestens einem Polysaccharid in einem wässerigen Medium, um ein zwei Phasen bildendes Gemisch herzustellen, Trennen der Phasen in eine schwerere, untere, konzentrierte Phase, die relativ reich an Protein ist, und in eine leichtere, obere, verdünnte Phase, die relativ reich an Polysaccharid ist, und geringere Mengen an aus dem Proteinmaterial überführten Proteinen enthält, **dadurch gekennzeichnet, dass** die abgetrennte, obere Phase auf eine Temperatur von 60°C bis 220°C erhitzt wird, Kühlen der erhitzten, oberen Phase, um gelähnliche Proteinteilchen, die aus dem Proteinmaterial mit dem Polysaccharid überführt werden, zu bilden, und anschließend Abtrennen und Trocknen der gelähnlichen Teilchen.

2. Verfahren nach Anspruch 1, wobei das Proteinmaterial Milch, Magermilch, ein Pflanzenextrakt mit Protein, wie Sojabohnen-Milch oder Lupinenbohnen-Milch, Blutprotein oder Kokosnuss-Milch ist.

3. Verfahren nach Anspruch 1, wobei das Polysaccharid ein Pektin mit hohem Methoxygruppen-Gehalt, ein Alginat, Gummi Arabicum, Gummi des Johannisbrots oder kappa-, lambda- oder iota-Carrageenan, oder Xanthan, Methylcellulose oder Carboxymethylcellulose ist.

4. Verfahren nach Anspruch 1, wobei die zwei Phasen durch Abscheiden oder Zentrifugation getrennt werden.

5. Verfahren nach Anspruch 1, wobei die leichtere, obere, verdünnte Phase durch Dekantieren entfernt wird.

6. Verfahren nach Anspruch 1, wobei der pH-Wert des wässerigen Mediums von 4 bis 10 ist.

7. Verfahren nach Anspruch 1, wobei die leichtere, obere, verdünnte Phase unter Rühren bei einer Temperatur von 70° bis 160°C für eine Zeitspanne von 1 Sekunde bis 60 Minuten erhitzt wird.

8. Verfahren nach Anspruch 1, wobei die erhitzte, leichtere, obere, verdünnte Phase auf eine Temperatur von 15° bis 60°C zur Bildung gelähnlicher Teilchen gekühlt wird.

9. Verfahren nach Anspruch 1, wobei die gelähnlichen Teilchen durch Sedimentation, Filtration oder Zentrifugation abgetrennt werden.

10. Fettarmer Nahrungsbestandteil, der durch ein Verfahren nach Anspruch 1 hergestellt wird.

11. Nahrungsprodukt mit einem fettarmen Nahrungsbestandteil, welches durch ein Verfahren nach einem der Ansprüche 1 bis 9 hergestellt wird.

## Revendications

1. Procédé pour la préparation d'ingrédients alimentaires à basse teneur en matières grasses, qui comprend la mise en contact d'une matière protéique avec au moins un polysaccharide dans un milieu aqueux pour produire un mélange formant deux phases, la séparation des phases en une phase concentrée inférieure plus lourde relativement riche en protéines et une phase diluée supérieure plus légère relativement riche en polysaccharide contenant une petite quantité de protéines transférée à partir de la matière protéique, **caractérisé en ce que** la phase supérieure séparée est chauffée à une température comprise dans l'intervalle de 60°C à 220°C, le refroidissement de la phase supérieure chauffée pour former des particules analogues à un gel des protéines transférées à partir de la matière protéique avec le polysaccharide, puis la séparation et le séchage des particules analogues à un gel.

2. Procédé suivant la revendication 1, dans lequel la matière protéique est le lait, le lait écrémé, un extrait végétal contenant des protéines, tel que le lait de soja ou le lait de graines de lupin, les protéines du sang ou le lait de coco.

3. Procédé suivant la revendication 1, dans lequel le polysaccharide est une pectine à haute teneur en groupes méthoxy, un alginate, la gomme arabique, la gomme de caroube ou la kappa-, lambda- ou iota-carraghénine, ou le xanthane, la méthylcellulose ou la carboxyméthylcellulose.

4. Procédé suivant la revendication 1, dans lequel les deux phases sont séparées par sédimentation ou centrifugation.

5. Procédé suivant la revendication 1, dans lequel la phase diluée supérieure plus légère est séparée par décantation.

6. Procédé suivant la revendication 1, dans lequel le pH du milieu aqueux est compris dans la plage de 4 à 10.

7. Procédé suivant la revendication 1, dans lequel la phase diluée supérieure plus légère est chauffée à une température comprise dans l'intervalle de 70° à 160°C avec agitation pendant une période de temps de 1 seconde à 60 minutes.

8. Procédé suivant la revendication 1, dans lequel la phase diluée supérieure plus légère chauffée est refroidie à une température comprise dans l'intervalle de 15° à 60°C pour former des particules analogues à un gel.

9. Procédé suivant la revendication 1, dans lequel les particules analogues à un gel sont séparées par sédimentation, filtration ou centrifugation.

10. Ingrédient alimentaire à basse teneur en matières grasses, préparé par un procédé suivant la revendication 1.

11. Produit alimentaire contenant un ingrédient alimentaire à basse teneur en matières grasses préparé par un procédé suivant l'une quelconque des revendications 1 à 9.
